# EUROPEAN PATENT SPECIFICATION

(11) **EP 1 690 451 B1**
(45) Date of publication and mention of the grant of the patent: **16.07.2008**
(21) Application number: 06002257.1
(22) Date of filing: 03.02.2006
(51) Int. Cl.: A01K 11/00

(54) **A method of provisionally joining livestock tag parts together, a livestock tag part and strip of livestock tags**
Verfahren zum temporären Verbinden von Viehmarkenteilen, Viehmarkenteil und Streifen von Viehmarken
Procédé de jonction provisoire d'éléments d'étiquette pour bétail, élément d'étiquette pour bétail et bande d'étiquettes pour bétail

(30) Priority: 09.02.2005 NO 20050681
(43) Date of publication of application: 16.08.2006
(73) Proprietor: Os Husdyrmerkefabrikk a/s, 2550 Os i Österdalen (NO)
(72) Inventor: Wikan, Egil, 2550 Os i Österdalen (NO)
(74) Representative: Manitz, Finsterwald & Partner GbR

(56) References cited:
- EP-A- 0 274 730
- BE-A3- 1 008 924
- FR-A- 2 485 357
- US-A1- 2004 116 940
- AGROBIOGEN: "TypiFix Instruction Manual Sheep and Goats" 6 September 2004 (2004-09-06), * page 2 - page 8 *

## Description

The present invention regards a method of joining livestock tag parts together in a provisional manner in accordance with the preamble of the appended Claim 1, a livestock tag part in accordance with the preamble of the appended Claim 6 and a strip of joined-together livestock tag parts in accordance with the preamble of the appended Claim 8.

Such livestock tags, or ear tags, as they are also called, have gained widespread use, especially in countries with industrial livestock production. In these countries, the tags have more or less completely replaced the previously common method of marking, which was to make a notch in or remove a small part of the animal's ear in order to make it possible to identify the owner of the animal. The branding that was previously widespread in some countries has to a great extent also been replaced by livestock tags. The livestock tags are manufactured in a variety of shapes colours, which facilitates identification, even at a distance.

The livestock tags will not only be used to identify the owner of the animal; today they are also used to identify the individual animal, thus making it possible to keep an account of the animal's life, including such things as illness, vaccinations etc. In recent years there have been increasing demands that it should be possible to track meat from the livestock farmer to the meat counter and back to the producer if required. This is particularly important if there is something wrong with the meat such as an excessive bacterial count or residual drugs, or if the area in which the livestock has been grazing is found to be polluted, after the animal has been slaughtered and the meat has found its way into the shops.

Each livestock tag consists of a male and a female part, which are assembled by inserting a tip on the male part through the cartilage of the animal's ear and into a cup part on the female part, and locking it in place. The ear tags are generally made from non-rigid plastic, with the exception of certain parts of the locking mechanism between the male and female parts. The identification numbers are applied to the tag at the manufacturer's.

The regulations of most industrial countries state that a livestock tag can not be removed until the animal has been slaughtered at the abattoir. Thus the tag is not removed in the case of a change of ownership. Instead, the new owner attaches his or her own tag as an addition to the existing one. For some types of animals it is a requirement within the EEA area that both ears be tagged. The pre-numbered tags are sent to the livestock farmer or owner by the manufacturer or an approved authority, to order. The livestock owner or a veterinary will then attach tags in accordance with the above regulations.

These requirements mean that livestock owners with a large number of livestock and an extensive trade in animals receive a large number of pre-numbered tags to be attached to animals. The male and female tags have the same identification numbers. Thus it is important for these two parts not to get separated. Tags that are delivered together usually have consecutive numbering. Therefore it is important that the tags are placed in numerical order in order to make it easy for the livestock owner to find the correct tag (identification number).

Some livestock owners also have their own tags in addition to the official tags (which all have the same colour). The owner's own tags may have a colour (or combination of colours) decided by the owner. These tags should not be separated from the official tags they belong with either.

So for one and the same animal, the owner may have two official tags, one for each ear, each consisting of two parts, and two or more own tags, also consisting of two parts. That means at least six, or even eight parts that should not become separated.

In order to keep the tags together some manufacturers have placed the tags on a tape, keeping them together in a strip. This works well for shipping purposes, but as soon as the livestock owner starts using the tags from the strip, the strip will tend to fall apart. After a short while, dirty fingers, liquids and heat will cause the glue on the tape to lose its adhesion, and after a while the tags can easily become separated. Plastic and pieces of cardboard have also been used to attach the tags to each other, with the same problems as those experienced with tape. Moreover, the tape, plastic and cardboard entails a consumption of materials and an increase in the amount of waste produced.

BE 1008924 shows an example of ear tag parts which are interconnected edge to edge by a shearable connection and also held together by a carrier.

US 2004/0116940 shows ear tag parts that are also connected edge to edge in a male female part pair, and also are connected to a sample container, thus making a set of three interconnected parts.

An instruction manual for the ear tag "TypiFix", published 6^{th} September 2004 also shows a set of male and female tag parts and a sample container connected edge to edge.

An edge to edge connection of the tag parts has limitations on how large the tag parts can be or how many parts that may be connected before the assembled strip becomes to difficult to handle. Moreover the connection has to be quite solid to prevent the parts from becoming unintentionally disconnected. This means that either a carrier has to be used, as in BE 1008924, or the connection has to be threads of a certain dimension, as in US 2004/0116940 and in "TypiFix".

Thus there exists a need for a method of joining livestock tag parts together, which results in the livestock tag parts staying together until they are required. As the livestock tags are produced at a high rate it is also desirable to provide a method that allows the tag parts to be attached to each other as soon as the identification numbers have been applied. In addition the joining of tag parts is preferably carried out without requiring the addition of any special materials such as required when using tape, plastic or cardboard.

The most important object of the invention is achieved by welding the tag parts together where the welding takes place between overlapping face surfaces of two tag parts placed in a partially overlapping arrangement. By doing so, the strip becomes shorter, thus taking up less space during transport. Also, the strip will have less of a tendency to fall apart.

Preferably the welding takes place without any addition of materials. This allows the process to be simplified considerably.

Preferably the tag parts are welded together by ultrasonic welding. This ensures quick and accurate welding.

Performing the welding between at least one raised portion on the one tag part and a surface on the other tag part will allow the size of the welding area, and consequently the strength of the joint, to be controlled.

Welding several tag parts into a strip allows the tag parts to be sent as one or a few units. Moreover, the tags may be arranged in a selected order, ensuring that the tags are used in this order.

The livestock tag part is characterized in that the plate part is provided with at least one raised portion on a face of the plate part for welding to a face of a plate part of another livestock tag part. This allows the tag part to be joined to another tag part in a controlled manner.

Preferably the raised portion has dimensions that are proportioned to provide a certain resistance to breaking. This ensures that the tags do not accidentally fall apart, yet allows them to be pulled apart manually.

The strip of joined-together livestock tag parts are characterized in that the tag parts have been joined together in a face-to-face overlapping arrangement through welding overlapping tag parts together at their overlapping faces, thus providing a compact strip that is easy to manufacture and send.

Preferably an identification number has been applied to the tag parts in the strip, with two adjacent tags, the female and male parts, respectively, having identical identification numbers, and a following pair of male and female parts having a following identification number, the last part of the identification number being visible on all the tag parts in the strip. This makes it easy for the user to check which identification numbers he or she has received, and to select the correct tag part to be used.

The invention will now be described in greater detail with reference to the accompanying drawings, in which:
Figure 1 shows a top view of a male part of a livestock tag;
Figure 2 shows a cross-sectional view of a section of a livestock tag;
Figure 3 shows a welding step during the joining of the livestock tags; and
Figure 4 shows a strip of joined-together tags.

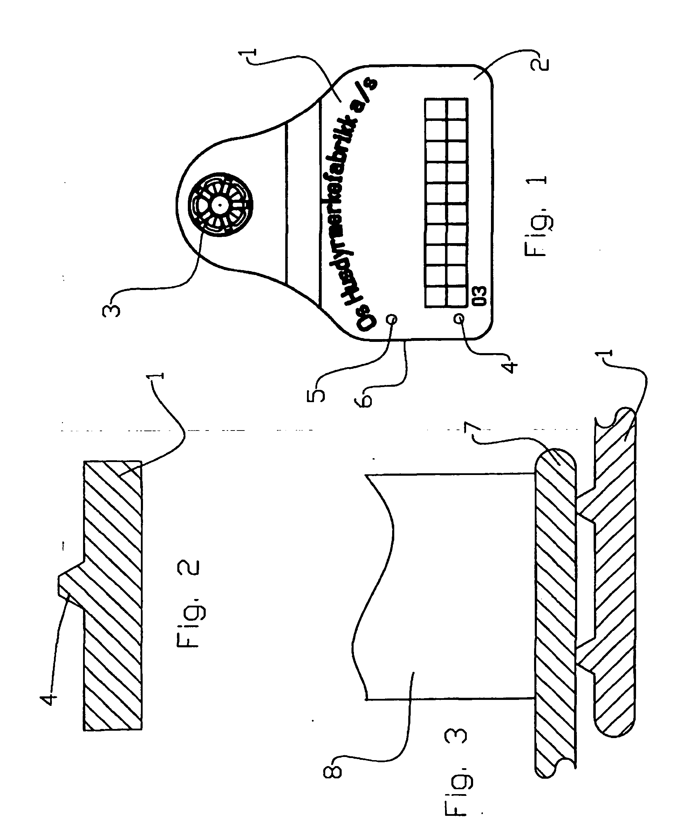

Figure 1 shows a plan view of a male part 1 of a livestock tag, showing the side that is not provided with an identification number, i.e. the side facing the animal's ear and the female part.

The tag part in Figure 1 may be of the type described in Norwegian patent no. 304771 corresponding to EP 0913083. For more information regarding how this tag is put together and how it works, please refer to this publication. Suffice it to mention that the male part comprises a plate part 2 and a pin part 3 that projects from the plate part 2 and has a tip at its outer end. The female part (not shown) on the other hand, has a cup part arranged to receive and retain the tip of the pin part of the male part 3. Obviously the livestock tag can also be of any other type, as the type of livestock tag is of little importance to the present invention.

The plate part 2 is arranged to be provided with an identification number or possibly a combination of letters and numbers, on the side not visible in Figure 1.

The plate part is formed with two raised portions 4 and 5. Preferably the raised portions 4, 5 project a few tenths of a millimetre from the surface of the plate part 2. Preferably the width of the raised portions 4, 5 is also a few tenths of a millimetre. The strength of the weld will depend on the dimensions of the raised portions. Thus the strength of the weld may be controlled by varying the dimensions. There may also be more than two raised portions or as little as one. The raised portions are formed in the area where the welding connection is required on the plate part of the tag, e.g. as shown in Figure 1, near one edge 6 of the tag part 1.

Figure 2 shows a detail of a section through the tag part 1 at a raised portion 4.

The raised portions 4, 5 will act both as accumulators during the welding process, which will be explained below, and to ensure that the tag parts are connected across just a small area of the tag parts.

The welding process will now be explained in greater detail with reference to Figure 3. The tag parts emerge from the step of applying identification numbers and are placed in a partially overlapping arrangement. Preferably every other tag is male and female.
Thus in Figure 3, a female part 7 is overlapping a male part 1. More particularly, the female part has its plate part placed on top of the raised portions 4, 5 of the male part 1.

The row of overlapping tag parts is moved past a welding head 8. Preferably the welding head is an ultrasonic welding head. The sound waves from the ultrasonic welding head 8 penetrate the material of the tag parts 1 and 7, heating it up. Due to the relatively small dimensions of the raised portions 4, 5 these will act as accumulators and start to fuse with the material of the overlying tag part 7. When the row of tags is moved on, the material will cool so that the raised portions adhere to the overlying tag part 7.

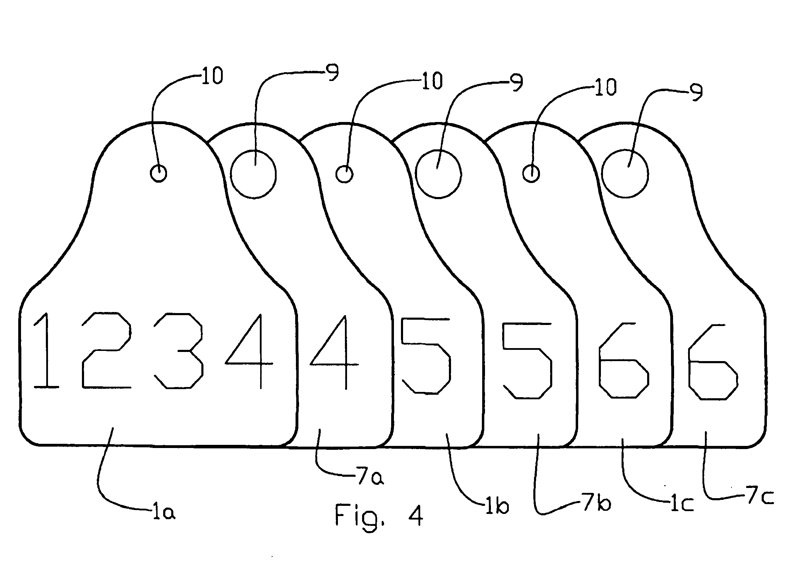

When the entire strip has been has passed by the welding head 8, a strip such as that shown in figure 4 will result. Here, six tag parts have been joined together; but obviously the strip may be longer. In Figure 4 the female parts are characterized by the cup part 9 and the male part 1a, 1b, 1c by the aperture 10 into the pin part (an aperture into which the needle on the marking pliers is inserted). As can be seen, the male part 1a and the female part 7a have the same identification number and the following pair of male/female parts has the next number in the series. As the last digit of each identification number is visible, it becomes easier to keep control of the tags in the strip.

Obviously, other methods of welding may be used instead of ultrasonic welding, such as laser welding and thermal welding. However, ultrasonic welding has been found to be highly advantageous in terms of speed, precision and controllable weld strength.

It is also conceivable that the tag parts may be welded together without utilizing raised portions but this entails a risk of the attachment being too strong or too weak. The attachment should be such that the tag parts may easily be pulled apart by hand but will not separate accidentally. The raised portions allow a very predictable attachment to be achieved.

Instead of placing the tags in a partially overlapping arrangement they may also be placed side by side and welded together along the edge. However, this makes for a significantly longer strip than in the case of overlapping tag parts, but this method of attachment eliminates the need for raised portions. In addition it becomes possible to apply the identification numbers after the tags have been joined together.

The method of the present invention also allows tags of different colours and different types to be joined together. The method does not require the use of any added materials or external fastening materials.

## Claims

1. A method of provisionally joining livestock tag parts by welding the tag parts (1a-c, 7a-c) together, **characterized in that** the welding takes place between overlapping face surfaces of two tag parts (1a-c, 7a-c) placed in a partially overlapping arrangement.

2. A method in accordance with Claim 1, **characterized in that** the welding is performed without added materials.

3. A method in accordance with Claim 1 or 2, **characterized in that** the tag parts (1a-c, 7a-c) are welded together by ultrasonic welding.

4. A method in accordance with one of Claims 1-3, **characterized in that** the welding takes place between at least one raised portion (4, 5) on the one tag part (1a-c) and a surface on the other tag part (7a-c).

5. A method in accordance with one of Claims 1 - 4, **characterized in that** several tags (1a-c, 7a-c) are welded together to form a strip.

6. Livestock tag part (1a-c) comprising a plate part (2) , **characterized in that** the plate part (2) is provided with at least one raised portion (4, 5) on a face of the plate part (2) for welding to a face of a plate part of another livestock tag part (7a-c).

7. Livestock tag part in accordance with Claim 6, **characterized in that** the raised portion (4, 5) has dimensions that are proportioned to provide a certain resistance to breaking.

8. A strip of joined-together livestock tag parts, **characterized in that** the tag parts (1a-c, 7a-c) are joined together in a face-to-face overlapping relationship by welding overlapping tag parts together at their overlapping faces.

9. A strip in accordance with Claim 8, **characterized in that** the tag parts are provided with identification numbers, where two adjacent tag parts (1a, 7a), which are the female (7a) and male (1a) parts, respectively, have the same identification number, and a following pair of male and female parts (1b, 7b) has a following identification number, the last part of the identification number being visible on all tag parts (1a-c, 7a-c) of the strip.

## Patentansprüche

1. Verfahren, um Viehbestandmarkenteile durch Zusammenschweißen der Markenteile (1a - c, 7a - c) übergangsweise zusammenzufügen,
**dadurch gekennzeichnet, dass**
das Schweißen zwischen Oberflächen von überlappenden Seiten zweier Markenteile (1a - c, 7a - c) stattfindet, die in einer teilweise überlappenden Anordnung angeordnet werden.

2. Verfahren nach Anspruch 1,
**dadurch gekennzeichnet, dass**
das Schweißen ohne zusätzliche Materialien ausgeführt wird.

3. Verfahren nach Anspruch 1 oder 2,
**dadurch gekennzeichnet , dass**
die Markenteile (1a - c, 7a - c) durch Ultraschallschweißen zusammengeschweißt werden.

4. Verfahren nach einem der Ansprüche 1 - 3,
**dadurch gekennzeichnet, dass**
das Schweißen zwischen mindestens einem erhöhten Abschnitt (4, 5) an dem einen Markenteil (1a - c) und einer Oberfläche an dem anderen Markenteil (7a - c) stattfindet.

5. Verfahren nach einem der Ansprüche 1 - 4,
**dadurch gekennzeichnet, dass**
mehrere Marken (1a - c, 7a - c) zusammengeschweißt werden, um ein Band zu bilden.

6. Viehbestandmarkenteil (1a - c), umfassend einen Plattenteil (2),
**dadurch gekennzeichnet, dass**
der Plattenteil (2) mit mindestens einem erhöhten Abschnitt (4, 5) an einer Seite des Plattenteils (2) zum Schweißen an eine Seite eines Plattenteils eines anderen Viehbestandmarkenteils (7a - c) versehen ist.

7. Viehbestandmarkenteil nach Anspruch 6,
**dadurch gekennzeichnet, dass**
der erhöhte Abschnitt (4, 5) Abmessungen aufweist, die proportioniert sind, um einen bestimmten Widerstand gegen ein Brechen bereitzustellen.

8. Band von zusammengefügten Viehbestandmarkenteilen,
**dadurch gekennzeichnet, dass**
die Markenteile (1a - c, 7a - c) durch Zusammenschweißen von überlappenden Markenteilen an ihren überlappenden Seiten in einer Überlappungsbeziehung mit zugewandten Seiten zusammengefügt sind.

9. Band nach Anspruch 8,
**dadurch gekennzeichnet, dass**
die Markenteile mit Identifikationsnummern versehen sind, wobei zwei benachbarte Markenteile (1a, 7a), die das weibliche (7a) bzw. das männliche (1a) Teil sind, die selbe Identifikationsnummer haben, und ein folgendes Paar eines männlichen und eines weiblichen Teils (1b, 7b) die darauffolgende Identifikationsnummer hat, wobei der letzte Teil der Identifikationsnummer an allen Markenteilen (1a - c, 7a - c) des Bands sichtbar ist.

## Revendications

1. Procédé pour joindre provisoirement des parties d'étiquettes de bétail en soudant les parties d'étiquette (1a-c, 7a-c) ensemble, **caractérisé en ce que** le soudage se produit entre le des surfaces faciales en chevauchement de deux parties d'étiquettes (1a-c, 7a-c) placées dans un agencement partiellement en chevauchement.

2. Procédé selon la revendication 1, **caractérisé en ce que** le soudage est exécuté sans matériau d'apport.

3. Procédé selon la revendication 1 ou 2, **caractérisé en ce que** les parties d'étiquettes (1a-c, 7a-c) sont soudées ensemble par soudage aux ultrasons.

4. Procédé selon l'une des revendications 1 à 3, **caractérisé en ce que** le soudage se produit entre au moins une portion relevée (4, 5) sur l'une des parties d'étiquette (1a-c) et une surface sur l'autre partie d'étiquette (7a-c).

5. Procédé selon l'une des revendications 1 à 4, **caractérisé en ce que** plusieurs étiquettes (1a-c, 7a-c) sont soudées ensemble pour former une bande.

6. Partie d'étiquette de bétail (1a-c) comprenant une partie en plaque (2), **caractérisée en ce que** la partie en plaque (2) est pourvue d'au moins une portion relevée (4, 5) sur une face de la partie en plaque (2) pour être soudée sur une face d'une partie en plaque d'une autre partie d'étiquette de bétail (7a-c).

7. Partie d'étiquette de bétail selon la revendication 6, **caractérisée en ce que** la portion relevée (4, 5) a des dimensions qui sont proportionnées pour présenter une certaine résistance à la rupture.

8. Ruban de parties d'étiquettes de bétail jointes ensemble, **caractérisé en ce que** les parties d'étiquettes (1a-c, 7a-c) sont jointes ensemble dans une relation de chevauchement face à face par soudage de parties d'étiquettes en chevauchement ensemble au niveau de leurs faces en chevauchement.

9. Ruban selon la revendication 8, **caractérisé en ce que** les parties d'étiquettes sont pourvues de numéros d'identification, de sorte que deux parties d'étiquettes adjacentes (1a, 7a), qui sont les parties femelle (7a) et mâle (1a) respectivement, ont le même numéro d'identification, et une paire suivante de partie mâle et femelle (1b, 7b) a le numéro d'identification suivant, la dernière partie du numéro d'identification étant visible sur toutes les parties d'étiquettes (1a-c, 7a-c) du ruban.
